# EUROPÄISCHE PATENTSCHRIFT

(11) **EP 3 744 510 B1**
(45) Veröffentlichungstag und Bekanntmachung des Hinweises auf die Patenterteilung: **31.08.2022**
(21) Anmeldenummer: 20166538.7
(22) Anmeldetag: 29.03.2020
(51) Int. Cl.: B29C 70/08, B29C 70/24, B29D 99/00, B29C 70/54, E04C 2/20, B29L 31/30

(54) **VERFAHREN UND EIN SYSTEM ZUM HERSTELLEN EINES BAUTEILS ODER HALBZEUGS MIT EINEM FASERVERSTÄRKTEN SCHAUMKERN**
METHOD AND SYSTEM FOR MANUFACTURING A COMPONENT OR SEMI-FINISHED PRODUCT WITH A FIBRE-REINFORCED FOAM CORE
PROCÉDÉ ET SYSTÈME DE FABRICATION D'UN COMPOSANT OU D'UN DEMI-PRODUIT DOTÉ D'UN NOYAU EN MOUSSE RENFORCÉ PAR DES FIBRES

(30) Priorität: 29.05.2019 DE 102019114433
(43) Veröffentlichungstag der Anmeldung: 02.12.2020
(73) Patentinhaber: Airbus Operations GmbH, 21129 Hamburg (DE)
(72) Erfinder: Endres, Gregor Christian, 21129 Hamburg (DE)
(74) Vertreter: LKGLOBAL Lorenz & Kopf PartG mbB Patentanwälte

(56) Entgegenhaltungen:
- US-A- 3 030 256

## Beschreibung

### TECHNISCHES GEBIET

Die Erfindung betrifft ein Verfahren und ein System zum Herstellen eines Bauteils oder Halbzeugs mit einem faserverstärkten Schaumkern.

### HINTERGRUND DER ERFINDUNG

In modernen Transportmitteln, wie etwa Verkehrsflugzeugen, werden an Werkstoffe und Bauteile unterschiedliche dimensionierende Bedingungen gestellt. Neben anwendungsspezifisch hohen Festigkeiten wird regelmäßig ein besonders geringes Gewicht gefordert. Weiterhin sollten zur ökonomischen Herstellung die Herstellkosten möglichst gering und die Installation der betreffenden Komponenten einfach durchführbar sein. Es ist bekannt, für luftfahrttechnische Anwendungen Kernverbund bzw. Sandwichmaterialien einzusetzen, welche einen Kern aufweisen, der von zwei oder mehr Deckschichten eingeschlossen wird. Die Deckschichten können aus einem faserverstärkten Kunststoff, einem metallischen Material oder einer Kombination hiervon ausgeführt sein. Es ist bekannt, für diese Zwecke einen Kern aus einem Wabenmaterial oder einem Schaumstoff zu verwenden.

Es sind Sandwichmaterialien bekannt, bei denen ein Schaumkern mit in den Verbund eingebrachten Fasern verstärkt wird. Diese Verstärkungsfasern werden mittels Harz infiltriert und werden dadurch für einen dauerhaften Kontakt mit dem Schaumkern und den Decklagen verklebt. Diese Technologie ist als "Tied Foam Core" (TFC) bekannt. Bei der Herstellung sticht eine Nadel durch den Verbund aus Schaumkern und Decklagen und zieht dabei eine trockene Faser oder ein Bündel aus trockenen Fasern durch den Verbund. Anschließend wird von außen Harz aufgebracht, beispielsweise zur Infiltrierung der Decklagen, wobei sich das Harz vakuumunterstützt durch eine Docht- bzw. Kapillarwirkung entlang der Stichkanäle auch um die Fasern legt. In einem abschließenden Verfahrensschritt wird die so hergestellte Vorform ausgehärtet. Die Verwendung trockener Fasern ist vorteilhaft, um bei dem Einbringen der Fasern eine hierzu verwendete Nähvorrichtung vor Verschmutzung zu schützen.

Die Schrift US 3030256, den Oberbegriffen der unabhängigen Ansprüchen entsprechend, offenbart eine vorgefertigte laminierte Platte, die umfasst:
mindestens einen Kern, der zwischen äußeren Schichten aus unterschiedlichem Material angeordnet und mit beiden verbunden ist;
Verstärkungselemente, die sich durch den Kern erstrecken;
wobei jedes Verstärkungselement beide Enden in überlappender Beziehung zu den Kernoberflächen gebogen hat,
und jedes Ende jedes Verstärkungselements sowohl am Kern als auch an der angrenzenden Außenschicht haftet.

### ZUSAMMENFASSUNG DER ERFINDUNG

Es könnte den Herstellprozess und die Bauteileigenschaften eines einen Schaumkern aufweisenden Sandwichmaterials verbessern, wenn Decklagen aus einem Prepreg-Material eingesetzt werden. Allerdings könnte das Harz in den Decklagen unter Applikation von Vakuum- oder Pressendruck die trockenen Stichkanäle gegen den Austritt der eingeschlossenen Luft abdichten, was eine porenfreie Erzeugung von Bauteilen erschweren würde. Eingeschlossene Luft würde sich in Form von Poren im Bereich einer Decklagenanbindung ansammeln und dadurch zu unerwünschten Materialeigenschaften führen. Eine Vorinfiltration einer reinen Schaumvorform, bevor imprägnierte Decklagen aufgebracht werden, wäre gemäß dem Stand der Technik zwar grundsätzlich möglich, würde jedoch einen zusätzlichen Verfahrensschritt und damit höhere Herstellkosten nach sich ziehen.

Eine Aufgabe der Erfindung liegt folglich darin, ein alternatives Verfahren zum Herstellen eines Bauteils mit einem faserverstärkten Schaumkern vorzuschlagen, das auch bei einer Verwendung vorimprägnierter Decklagen rasch und einfach durchführbar ist und eine Verschmutzung einer Nähvorrichtung zuverlässig verhindert.

Die Aufgabe wird gelöst durch ein Verfahren mit den Merkmalen des unabhängigen Anspruchs 1. Vorteilhafte Ausführungsformen und Weiterbildungen sind den Unteransprüchen und der nachfolgenden Beschreibung zu entnehmen.

Gemäß unabhängigem Anspruch 1 wird ein Verfahren zum Herstellen eines Bauteils oder Halbzeugs mit einem faserverstärkten Schaumkern vorgeschlagen, das Verfahren aufweisend die Schritte: Bereitstellen eines ebenen oder räumlich gekrümmten/geformten Schaumkerns mit einer ersten Hauptfläche und einer gegenüberliegenden zweiten Hauptfläche, Platzieren mindestens einer Nadel an der ersten Hauptfläche des Schaumkerns, Durchstechen des Schaumkerns mit der Nadel, so dass eine Nadelspitze durch die erste Hauptfläche in den Schaumkern und anschließend durch die zweite Hauptfläche dringt, Einhaken einer Verstärkungsfaser an der Nadelspitze, Zurückziehen der Nadel, so dass die Verstärkungsfaser durch den Schaumkern gezogen wird, und Beschichten der Verstärkungsfaser mit einem flüssigen oder pulverförmigen Harz während des Zurückziehens der Nadel, dadurch gekennzeichnet, dass das Durchstechen der Nadel das Eindringen in ein Stichloch einer Stichplatte aufweist, auf der der Schaumkern aufgelegt ist, das Beschichten der Verstärkungsfaser durch eine Beschichtungsvorrichtung in dem Stichloch durchgeführt wird.

Der Schaumkern kann in einem separaten Schritt hergestellt oder zumindest aus einem separat hergestellten Schaumstoff herausgeschnitten werden. Der Schaumstoff kann insbesondere ein geschlossenzelliger Schaumstoff sein, der vergleichsweise dimensionsstabil ist und bevorzugt ein Infiltrieren von Harz in Poren des Schaumstoffs verhindert. Neben einer ebenen Ausführung des Schaumkerns ist selbstverständlich auch ein Schaumkern mit bereichsweise unterschiedlichen Dicken und/oder einer ebenen oder räumlich gekrümmten Form denkbar. Die Form des Substrats zur Aufnahme des Schaumkerns kann daran angepasst sein.

Zum Einfügen von Verstärkungsfasern wird eine geeignete Nadel so platziert, dass sie durch eine bevorzugt lineare Bewegung durch den Schaumkern geführt werden kann. Die Nadel durchsticht dabei nacheinander die erste Hauptfläche, den Schaumkern und die zweite Hauptfläche. Durch das Einhaken einer Verstärkungsfaser an der Nadelspitze kann diese durch den Schaumkern gezogen werden.

Die Verstärkungsfaser kann über diverse Umlenkpunkte zu Schlaufen mit gleicher Schenkellänge geformt werden, welche in einem Scheitelpunkt in einen an der Nadelspitze befindlichen Nadelhaken eingehängt werden können. Es kann sich dabei sowohl um eine einzelne Schlaufe, als auch um eine mäanderförmige Vorlage mit beliebigen Wiederholungen handeln, die entsprechend mit einer äquivalenten Nadelanzahl in den Schaumkern eingezogen werden.

Eine Besonderheit des erfindungsgemäßen Verfahrens liegt darin, dass trotz der Verwendung trockener Fasern ein separater Infiltrierungsschritt zum Infiltrieren der Fasern nicht notwendig ist. Dies wird dadurch erreicht, dass unmittelbar bei dem Zurückziehen der Nadel die betreffende zunächst trockene Verstärkungsfaser mit einem Harz beschichtet wird. Dies erfolgt bevorzugt unmittelbar an einer Durchstichöffnung der zweiten Hauptfläche. Eine Nähvorrichtung, die für das Bewegen der Nadel und das Bereitstellen der Verstärkungsfasern notwendig ist, wird folglich nicht durch flüssiges Harz beschmutzt, so dass hierfür keine Vorkehrungen getroffen werden müssen.

Ein auf diese Weise hergestelltes Bauteil oder Halbzeug ist insbesondere für die Anwendung in einem Verkehrsmittel geeignet. Es kann mit Decklagen aus einem vorimprägnierten Fasergewebe aller Arten abgedeckt werden. Hieraus könnten unterschiedliche Kabinenbauteile für ein Verkehrsflugzeug hergestellt werden, beispielsweise Fußbodenplatten, Klappen, Wandungen von Kabinenmonumenten, Kabinenverkleidungen oder ähnliches. Ebenso ist eine Anwendung in der Automobilindustrie, im Schiffbau oder allgemein im Transportwesen vorstellbar.

Die durch den Schaumkern gezogenen Verstärkungsfasern können anschließend abgelängt und/oder auf die erste bzw. zweite Hauptfläche geklappt werden. Der mit imprägnierten Verstärkungsfasern ausgestattete Schaumkern kann anschließend durch Decklagen abgedeckt werden, beispielsweise aus einem vorimprägnierten Faserhalbzeug.

Durch das erfindungsgemäße Verfahren wird die einfache Verwendung von vorimprägnierte Decklagen ermöglicht, da ein separater Schritt zum Infiltrieren der Verstärkungsfasern nicht notwendig ist. Gleichzeitig ist das Infiltrieren der Verstärkungsfasern in einem separaten, vorbereitenden Schritt, d.h. vor Anbringen der Decklagen und nach dem Einziehen der Verstärkungsfasern, ebenso nicht erforderlich. Die Durchführung des erfindungsgemäßen Verfahrens ist folglich vorteilhaft, denn Aufwand, Zeit und Kosten zur Herstellung des Bauteils können signifikant reduziert werden.

Gemäß unabhängigem Anspruch 1 weist das Durchstechen der Nadel das Eindringen in ein Stichloch einer Stichplatte auf, auf der der Schaumkern aufgelegt ist, wobei das Beschichten der Verstärkungsfaser durch eine Beschichtungsvorrichtung in dem Stichloch durchgeführt wird. Die Nadel kann folglich durch den Schaumkern in ein darunter oder dahinter befindliches Stichloch eindringen, das die ausreichende Bewegbarkeit der Nadel und die gleichzeitige Auflage des Schaumkerns sicherstellt. Die Beschichtungsvorrichtung kann durch ihre Platzierung in dem Stichloch eine ausreichende räumliche Trennung zu der Nähvorrichtung und anderen zu schützenden Komponenten bewirken. Die Nadel ist so zu bewegen, dass sie sich vollständig durch das Stichloch bewegt, wonach eine Schlaufe in die Nadel eingehängt werden kann. Die Stichplatte und folglich das Stichloch weisen aus Stabilitätsgründen eine nicht unerhebliche Bauteildicke auf. Dort ist demnach ausreichend Bauraum vorhanden, um eine Beschichtungsvorrichtung zu platzieren, mit der das Harz auf die Fasern appliziert werden kann, ohne dass eine beispielsweise darunter befindliche Mechanik zur Schlaufenbildung beeinträchtigt wird. Zudem kann sich die Faser nach Eintritt der Nadel in den Schaumkern nicht mehr aus der Nadel aushängen und eventuelle Kräfte, die während des Imprägnierungsvorgangs aufgebracht werden, führen nicht zum Faserverlust und damit zu einem Fehlstich. Die Verstärkungsfaser wird folglich unmittelbar vor dem Eindringen in den Schaumkern mit Harz beschichtet. Der Vorteil dieser Vorgehensweise liegt darin, dass zum einen ein zusätzlicher Verfahrensschritt eingespart wird und zum anderen die eingebrachte Harzmenge auf das notwendige Minimum reduziert wird, die zur Imprägnierung der Fasern erforderlich ist. Eventuelle Kavitäten aus Schaumporen, die in einem Infusionsschritt mit Harz gefüllt werden, werden hier zum Vorteil des Bauteilgewichts nicht aufgefüllt.

Zur Steuerung des Harzauftrags ist bevorzugt, wenn die Beschichtung begonnen wird, sobald die Verstärkungsfaser im Begriff ist, in den Schaumkern einzutreten und beendet wird, sobald die Verstärkungsfaser vollständig in den Schaumkern eingezogen ist.

Die Beschichtungsvorrichtung kann in einer vorteilhaften Ausführungsform eine Walzenanordnung aufweisen, durch die die Verstärkungsfaser geführt wird. Die Walzenanordnung kann eine oder bevorzugt mehrere Walzen aufweisen, die als Transferkomponenten fungieren. Sie können mit einer Harzquelle in Verbindung stehen und durch Überstreichen der Faser diese mit Harz benetzen. Die Verwendung von Walzen kann sich unter anderem für flüssige und zähflüssige Harze anbieten.

Die Beschichtungsvorrichtung kann weiterhin auch Düsen aufweisen, die das Harz auf die Verstärkungsfaser aufbringen. Es ist vorstellbar, eine einzelne Düse einzusetzen. Allerdings kann es vorteilhaft sein, zumindest zwei Düsen vorzusehen, die aus zwei unterschiedlichen Richtungen die betreffende Verstärkungsfaser mit Harz versehen. Die Verwendung von Düsen ist insbesondere bei flüssigem oder weniger zähflüssigem Harz sinnvoll.

Es wäre auch denkbar, eine elektrostatisch arbeitende Beschichtungsvorrichtung zu verwenden, die dazu ausgebildet ist, mittels elektrostatischer Aufladung ein pulverförmiges Harz aufzunehmen und an die betreffende Verstärkungsfaser aufzutragen. Es ist denkbar, hierzu ebenso eine Walze oder Walzenanordnung einzusetzen. Es wäre denkbar, eine Beheizung der Beschichtungsvorrichtung vorzusehen, so dass beim oder nach dem Auftragen das Harz erweicht wird, um eine Anhaftung an der betreffenden Verstärkungsfaser zu erreichen.

Die Walzenanordnung könnte mindestens zwei Kalanderwalzen aufweisen, die zum Beschichten in einen Flächenkontakt mit der Verstärkungsfaser bewegbar sind und zum Unterbrechen des Beschichtens von der Verstärkungsfaser entfernbar sind. Die Kalanderwalzen können jeweils um eine Achse rotierbar gelagert sein. Durch Bewegen der Kalanderwalzen in eine Richtung quer zu der jeweiligen Achse kann selektiv eine Beschichtungsposition eingenommen oder wieder verlassen werden, in der die jeweilige Kalanderwalze mit der betreffenden Faser in einen Flächenkontakt gerät. Die Kalanderwalzen könnten aus einem metallischen Material ausgebildet sein und aktiv rotiert oder passiv rotierbar gelagert werden. Die Kalanderwalzen sind so zueinander angeordnet, dass zwischen ihnen ein Spalt mit vordefiniertem Spaltmaß ausgebildet werden kann. Die Bewegbarkeit ist insbesondere quer zu einer Durchführungsrichtung der Verstärkungsfasern auszubilden. Es ist vorstellbar, die Kalanderwalzen zu beheizen, um eine verbesserte Anhaftung des Harzes zu ermöglichen.

Bevorzugt könnten die Kalanderwalzen zum Herstellen des Flächenkontakts beidseitig zum Umschließen der Verstärkungsfaser an diese heranbewegt werden. Die Faser ist im umschlossenen Zustand in einem bündigen Flächenkontakt mit den Kalanderwalzen und kann durch Benetzung mit einer Harzschicht versehen werden.

Es ist besonders bevorzugt, wenn die Kalanderwalzen in einen Flächenkontakt mit der Verstärkungsfaser bewegt werden, sobald die Nadelspitze im Begriff ist, das Stichloch zu verlassen. Dieser Zeitpunkt, in dem die Kalanderwalzen dann in den Flächenkontakt mit der Verstärkungsfaser gebracht werden, ist geeignet, eine größtmögliche Benetzung der Verstärkungsfaser durchzuführen. Die Nadelspitze befindet sich dann knapp außerhalb des Stichlochs, wenn die Benetzung der Verstärkungsfaser beginnt. Abhängig von der Geschwindigkeit der Nadelbewegung und der Kalanderwalzen kann der betreffende Zeitpunkt durch Anpassung der Mechanik eingestellt werden.

Weiterhin kann das Verfahren den Schritt des Anordnens mindestens einer Decklage an der ersten Hauptfläche und/oder der zweiten Hauptfläche zum Ausbilden einer ersten Vorform aufweisen. Die mindestens eine Decklage kann eine erste Decklage an der ersten Hauptfläche umfassen. Ebenso kann diese eine zweite Decklage an der zweiten Hauptform umfassen. Durch das Bereitstellen des Schaumkerns und das Anordnen von Decklagen vor dem Einbringen der Fasern wird eine Vorform des herzustellenden Bauteils vorbereitet. Die erste Vorform könnte durch die Nadel durchdrungen werden, um die Verstärkungsfaser durch den Verbund aus Schaumkern und der mindestens einen Decklage zu ziehen. Um das Eindringen der Nadel zu ermöglichen ist es sinnvoll, die mindestens eine Decklage aus einem Textil und insbesondere einem trockenen Textil herzustellen. Es könnte sich bei einer ausreichenden Festigkeit der Nadel und einer angepassten Nähvorrichtung jedoch auch die Möglichkeit ergeben, die mindestens eine Decklage aus einem vorimprägnierten Faserhalbzeug (Prepreg) herzustellen.

Gemäß unabhängigem Anspruch 8 wird ein System zum Herstellen eines Bauteils oder Halbzeugs mit einem faserverstärkten Schaumkern vorgeschlagen, das System aufweisend ein Substrat zum Auflegen eines Schaumkerns, eine Nähvorrichtung mit einer zumindest linear bewegbaren Nadel, eine Faserbereitstellungseinrichtung zum räumlichen Bereitstellen einer Faser, und eine Beschichtungsvorrichtung, wobei die Nähvorrichtung dazu ausgebildet ist, die Nadel an einer ersten Hauptfläche des Schaumkerns zu platzieren und den Schaumkern zu durchstechen, so dass eine Nadelspitze durch die erste Hauptfläche in den Schaumkern und anschließend durch eine gegenüberliegend angeordnete zweite Hauptfläche des Schaumkerns dringt, wobei die Faserbereitstellungseinrichtung dazu ausgebildet ist, eine bereitgestellte Verstärkungsfaser so zu platzieren, dass sie an die den Schaumkern durchstechende Nadelspitze einhakbar ist, und wobei die Beschichtungsvorrichtung dazu ausgebildet ist, eine in der Nadelspitze eingehakte und durch den Schaumkern gezogene Verstärkungsfaser unmittelbar vor dem Eintreten in den Schaumkern mit Harz zu beschichten.

Sämtliche zur Erläuterung des Verfahrens erwähnten strukturellen Merkmale sind ebenfalls als strukturelle Merkmale des Systems vorstellbar.

Gemäß unabhängigem Anspruch 8 ist das Substrat eine Stichplatte mit einem Stichloch, wobei die Nähvorrichtung dazu ausgebildet ist, die Nadel durch den Schaumkern in das Stichloch und zurück zu bewegen.

Gemäß unabhängigem Anspruch 8 ist die Beschichtungsvorrichtung in, an oder unter dem Stichloch angeordnet.

Die Beschichtung der Faser erfolgt dann an einer Stelle unmittelbar bevor die Faser in den Schaumkern eintritt. Die Faserbereitstellungseinrichtung und/oder die Nähvorrichtung können dabei vor Verschmutzung durch Harzauftrag geschützt werden.

Gemäß unabhängigem Anspruch 8 ist die Beschichtungsvorrichtung dazu ausgebildet, einen Beschichtungsmodus selektiv zu aktivieren und zu deaktivieren. Die Beschichtung kann folglich durch Wechsel in den Beschichtungsmodus oder aus dem Beschichtungsmodus heraus gesteuert werden.

Ein Beschichtungsmodus ist als ein Betriebsmodus der Beschichtungsvorrichtung zu verstehen, in dem eine Beschichtung durchgeführt wird. Durch ein Aktivieren des Beschichtungsmodus wird folglich eine Beschichtung einer sich durch die Beschichtungsvorrichtung bewegenden Faser ermöglicht. Durch das Deaktivieren wird der Beschichtungsvorgang unterbrochen. Beim Durchstechen der Nadel zum Einhängen der Verstärkungsfaser kann demzufolge das Beschichten unterbrochen werden. Diese erfolgt bevorzugt erst dann, wenn die Nadel im Begriff ist, das Stichloch zu verlassen.

Wie vorangehend bereits ausgeführt ist es vorteilhaft, wenn die Beschichtungsvorrichtung mindestens zwei Kalanderwalzen aufweist, die gegenläufig und quer zu einer Nadelbewegungsrichtung verfahrbar sind, so dass die Verstärkungsfaser selektiv zum Beschichten umschließbar ist. Zum Verfahren kann zumindest eine der Kalanderwalzen an einem verfahrbaren Schlitten rotierbar gelagert sein. Der Schlitten kann mit einer pneumatischen, hydraulischen, elektromagnetischen oder motorischen Antriebsvorrichtung verbunden sein, die dazu ausgebildet ist, einen raschen Wechsel der Position des Schlittens durchzuführen. Bevorzugt sind beide Kalanderwalzen auf jeweils einem Schlitten in gegenläufigen Richtungen gelagert, wobei beide Schlitten durch individuelle oder eine gemeinsame Antriebsvorrichtung bewegbar sein könnten.

In einer weiter vorteilhaften Ausführungsform weist die Beschichtungsvorrichtung eine Injektionsdüse auf, die mit einer Harzzufuhrvorrichtung in Fluidverbindung bringbar ist. Die Injektionsdüse kann dazu ausgebildet sein, auf eine Transferkomponente der Beschichtungsvorrichtung auf einer der Faser abgewandten Seite Harz aufzubringen, welches dann über die Transferkomponente wiederum auf die Faser aufgebracht wird.

Bei einer vorteilhaften Ausführungsform des Systems kann die Beschichtungsvorrichtung eine Anordnung aus drei Kalanderwalzen aufweisen, von denen ein Paar aus zwei Kalanderwalzen und eine einzelne Kalanderwalze auf gegenüberliegenden Seiten des Stichlochs angeordnet sind, wobei die Kalanderwalzen derart angeordnet sind, dass die einzelne Kalanderwalze in eine zwischen den Kalanderwalzen des Paars gebildete Lücke bewegbar und mit den Kalanderwalzen in Flächenkontakt bringbar ist, um die Verstärkungsfaser mit den drei Kalanderwalzen in Flächenkontakt zu bringen. Die Verstärkungsfaser kann dadurch zwischen zwei Walzenpaaren durchgeführt werden, um eine Harzbeschichtung zu empfangen.

Des Weiteren kann das Stichloch länglich ausgeformt sein. Es könnte beispielsweise elliptisch geformt sein. Dadurch wird insbesondere in der Längserstreckung ausreichend Platz geschaffen, um eine Beschichtungsvorrichtung unterzubringen.

### KURZE BESCHREIBUNG DER FIGUREN

Weitere Merkmale, Vorteile und Anwendungsmöglichkeiten der vorliegenden Erfindung ergeben sich aus der nachfolgenden Beschreibung der Ausführungsbeispiele und den Figuren. In den Figuren stehen weiterhin gleiche Bezugszeichen für gleiche oder ähnliche Objekte.
Fig. 1a zeigt ein System zum Herstellen eines Bauteils mit einem faserverstärkten Schaumkern in einer schematischen Darstellung.
Fig. 1b zeigt eine Detailansicht eines Stichlochs einer Stichplatte aus Fig. 1a.
Fig. 2 bis 9 zeigen aufeinander folgende Verfahrensschritte zum Herstellen eines Bauteils.

### DETAILLIERTE DARSTELLUNG EXEMPLARISCHER

### AUSFÜHRUNGSFORMEN

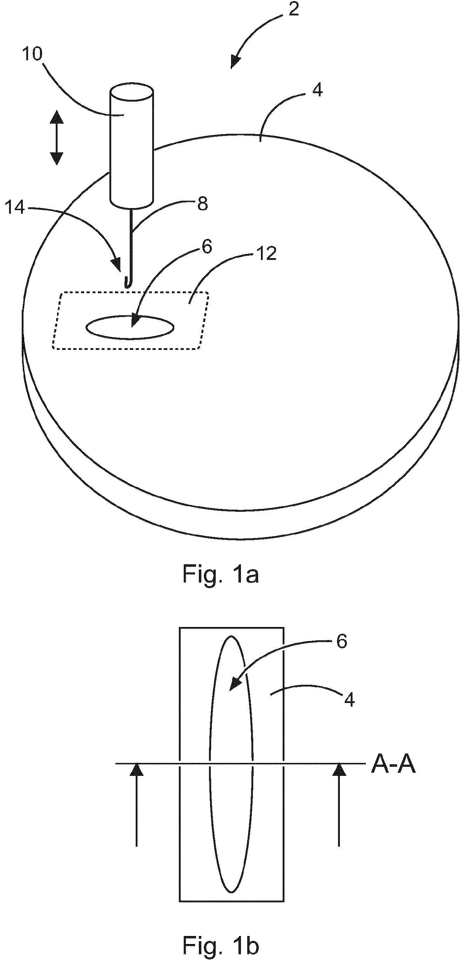

Fig. 1 zeigt ein Ausführungsbeispiel eines Systems 2 zum Herstellen eines Bauteils mit einem faserverstärkten Schaumkern. Das System 2 weist ein Substrat 4 in Form einer Stichplatte auf, die zum Auflegen eines Schaumkerns dient. Die Stichplatte 4 besitzt ein Stichloch 6, das beispielhaft elliptisch ausgeführt ist und sich durch die gesamte Dicke der Stichplatte 4 erstreckt. Das Stichloch 6 ist dazu vorgesehen, dass eine Nadel 8, welche durch eine geeignet platzierte Nähvorrichtung 10 zumindest linear bewegbar ist, vollständig durch die Stichplatte 4 treten kann. Befindet sich ein Schaumkern auf der Stichplatte 4, kann die Nadel 8 den Schaumkern durchstechen und anschließend in das Stichloch 6 geraten.

An einer in dieser Darstellung nicht sichtbaren gegenüberliegenden Fläche befindet sich eine schematisch angedeutete Faserbereitstellungseinrichtung 12, die dazu ausgebildet ist, Fasern in einen Haken 14 an einem distalen Ende der Nadel 8 einzuhängen. Die eingehängte Verstärkungsfaser wird bei einer rückwärts gerichteten Bewegung der Nadel 8 durch das Stichloch 6 und anschließend durch den darauf befindlichen Schaumkern gezogen. Dieser Vorgang wird in den weiter nachfolgenden Figuren detaillierter dargestellt.

Fig. 1b zeigt eine Detaildarstellung des elliptischen Stichlochs 6 sowie eine Schnittebene A-A, die für die nachfolgenden Darstellungen als Referenz gilt.

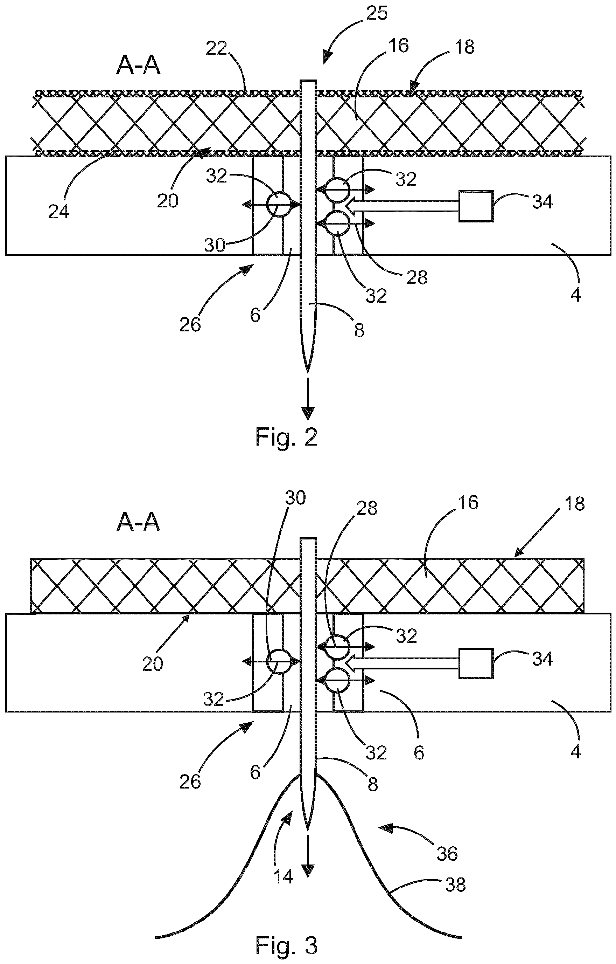

In Fig. 2 wird die Stichplatte 4 mit einem darauf befindlichen Schaumkern 16 gezeigt, der eine erste Hauptfläche 18 und eine gegenüberliegende zweite Hauptfläche 20 aufweist. Lediglich beispielhaft und durch gestrichelte Linien ausschließlich optional gekennzeichnet wird der Schaumkern 16 von einer ersten Decklage 22 aus einem vorimprägnierten flächigen Faserhalbzeug und einer bevorzugt gleichartigen zweiten Decklage 24 umschlossen. Da diese Variante jedoch nicht erforderlich ist, werden die Decklagen 22 und 24 in den weiter nachfolgenden Figuren weggelassen, ist jedoch stets eine denkbare Variante. Die Kombination aus Schaumkern und Decklagen kann als eine erste Vorform 25 bezeichnet werden. Die Nadel 8 befindet sich in dieser Darstellung in einer Position, in der die erste Vorform 25 bzw. der Schaumkern 16 durchstochen ist.

Eine Beschichtungsvorrichtung 26 ist in dem Stichloch 6 angeordnet. Lediglich beispielhaft weist die Beschichtungsvorrichtung 26 einen durch Bewegungspfeile angedeuteten ersten Schlitten 28 und einen zweiten Schlitten 30 auf, die lateral bewegbar sind. Dies bedeutet, dass sie sich in der Ebene der Stichplatte 4 bewegen können. An dem ersten Schlitten 28 sind exemplarisch zwei Kalanderwalzen 32 drehbar angeordnet, die über eine Harzzufuhrvorrichtung 34 mit einem Harz versorgt werden können. Diese ist beispielsweise mit einer Injektionsdüse ausgestattet. Der zweite Schlitten 30 ist mit einer drehbar gelagerten Kalanderwalze 32 ausgestattet, die in einer Höhenrichtung der Stichplatte 4 zwischen den beiden Kalanderwalzen 32 des ersten Schlittens 28 angeordnet sind. Die Kalanderwalzen 32 sind in dieser Darstellung seitlich von der Nadel 8 beabstandet. Die Beschichtungsvorrichtung 26 ist dann folglich in einem deaktivierten Zustand.

In Fig. 3 ist durch die Faserbereitstellungseinrichtung eine Schlaufe 36 einer Verstärkungsfaser 38 an die Nadel 8 geführt und dort in den Haken 14 eingehängt. Die Nadel 8 ist dabei, durch das Stichloch 6 und den Schaumkern 16 wieder nach außen zu treten und dabei die Verstärkungsfaser 38 mitzuführen.

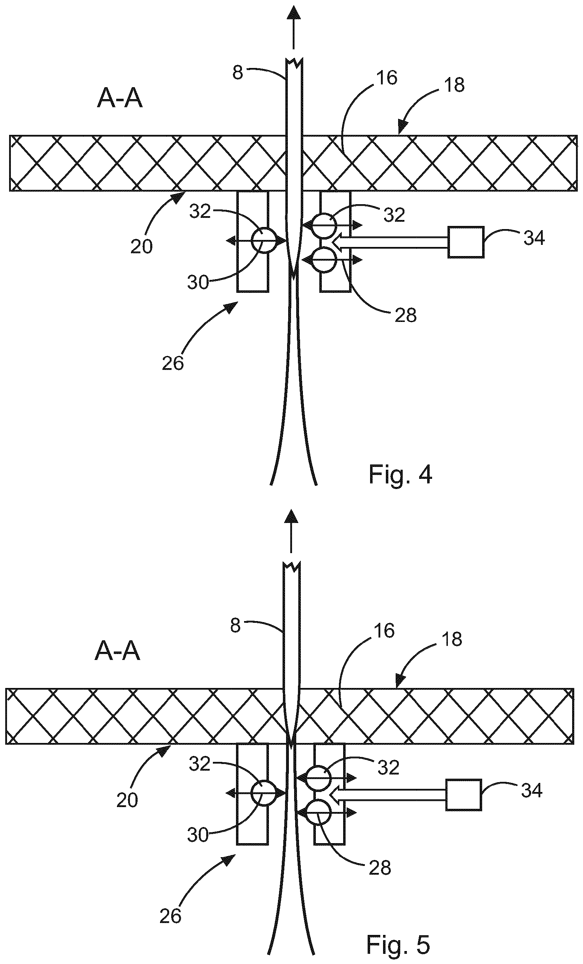

Dies wird weiter in Fig. 4 gezeigt. Die Beschichtungsvorrichtung 26 befindet sich noch immer im deaktivierten Zustand, während die Nadel 8 sich nur noch bis etwas über die halbe Tiefe in das Stichloch 6 erstreckt.

In Fig. 5 ist die Nadel 8 im Begriff, das Stichloch 6 zu verlassen. Die Beschichtungsvorrichtung 26 könnte ab diesem Zeitpunkt in den aktiven Zustand versetzt werden.

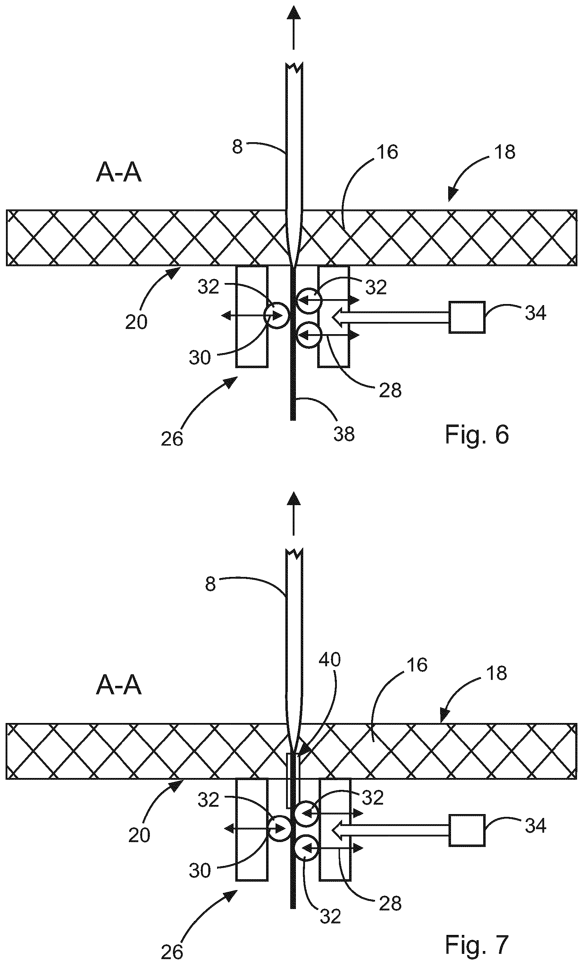

Dies ist in Fig. 6 durchgeführt. Die Schlitten 28 und 30 werden in Bewegung versetzt, um die einzelnen Kalanderwalzen 32 zueinander zu bewegen, so dass die durchgeführte Verstärkungsfaser 38 dazwischen eingeschlossen wird. Harz aus der Harzzuführvorrichtung 34 wird an die Kalanderwalzen 32 geführt, so dass diese das Harz an die Verstärkungsfaser 38 auftragen. Folglich wird eine mit Harz beschichtete Verstärkungsfaser 38 durch die erste Vorform 25 gezogen. Die Harzbeschichtung wird in Fig. 7 mit dem Bezugszeichen 40 angedeutet.

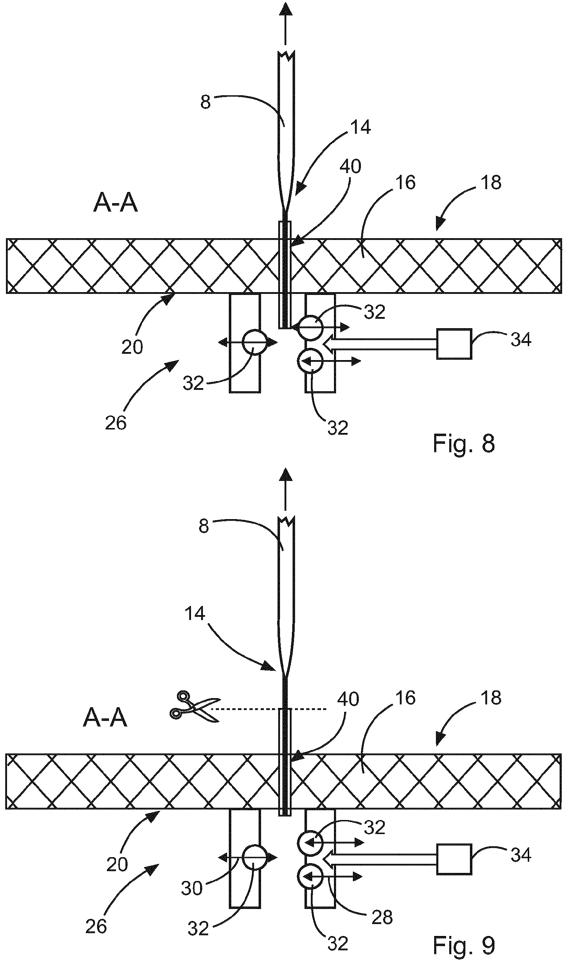

Fig. 8 zeigt einen anschließenden Übergang der Beschichtungsvorrichtung 26 in den deaktivierten Zustand. Die beschichtete Verstärkungsfaser 38 ist vollständig durch den Schaumkern 16 geführt und der Beschichtungsvorgang kann unterbrochen werden.

In Fig. 9 schließlich wird das Zurechtschneiden der Verstärkungsfaser 38 angedeutet. Die abgelängte Verstärkungsfaser 38 könnte umgelegt und auf die Hauptflächen 18 und 20 des Schaumkerns 16 gelegt werden. Hiernach kann sich unmittelbar der vorangehend erläuterte Prozess wiederholen.

Ergänzend sei darauf hingewiesen, dass "aufweisend" keine anderen Elemente oder Schritte ausschließt, und "ein" oder "eine" keine Vielzahl ausschließt. Bezugszeichen in den Ansprüchen sind nicht als Einschränkung anzusehen.

### BEZUGSZEICHEN

- 2: System
- 4: Stichplatte / Substrat
- 6: Stichloch
- 8: Nadel
- 10: Nähvorrichtung
- 12: Faserbereitstellungseinrichtung
- 14: Haken
- 16: Schaumkern
- 18: erste Hauptfläche
- 20: zweite Hauptfläche
- 22: erste Decklage
- 24: zweite Decklage
- 25: erste Vorform
- 26: Beschichtungsvorrichtung
- 28: erster Schlitten
- 30: zweiter Schlitten
- 32: Kalanderwalze
- 34: Harzzufuhrvorrichtung
- 36: Schlaufe
- 38: Verstärkungsfaser

## Patentansprüche

1. Verfahren zum Herstellen eines Bauteils oder Halbzeugs mit einem faserverstärkten Schaumkern (16), aufweisend die Schritte:
- Bereitstellen eines ebenen oder räumlich gekrümmten/geformten Schaumkerns (16) mit einer ersten Hauptfläche (18) und einer gegenüberliegenden zweiten Hauptfläche (20),
- Platzieren mindestens einer Nadel (8) an der ersten Hauptfläche (18) des Schaumkerns (16),
- Durchstechen des Schaumkerns (16) mit der Nadel (8), so dass eine Nadelspitze durch die erste Hauptfläche (18) in den Schaumkern (16) und anschließend durch die zweite Hauptfläche (20) dringt,
- Einhaken einer Verstärkungsfaser (38) an der Nadelspitze,
- Zurückziehen der Nadel (8), so dass die Verstärkungsfaser (38) durch den Schaumkern (16) gezogen wird, und
- Beschichten der Verstärkungsfaser (38) mit einem flüssigen oder pulverförmigen Harz während des Zurückziehens der Nadel (8), **dadurch gekennzeichnet, dass**
- das Durchstechen der Nadel (8) das Eindringen in ein Stichloch (6) einer Stichplatte (4) aufweist, auf der der Schaumkern (16) aufgelegt ist,
- das Beschichten der Verstärkungsfaser (38) durch eine Beschichtungsvorrichtung (26) in dem Stichloch (6) durchgeführt wird.

2. Verfahren nach Anspruch 1,
wobei die Beschichtung begonnen wird, sobald die Verstärkungsfaser (38) im Begriff ist, in den Schaumkern (16) einzutreten und wobei die Beschichtung beendet wird, sobald die Verstärkungsfaser (38) vollständig in den Schaumkern (16) eingezogen ist.

3. Verfahren nach Anspruch 1,
wobei die Beschichtungsvorrichtung (26) eine Walzenanordnung aufweist, durch die die Verstärkungsfaser (38) geführt wird.

4. Verfahren nach Anspruch 3,
wobei die Walzenanordnung mindestens zwei Kalanderwalzen (32) aufweist, die zum Beschichten in einen Flächenkontakt mit der Verstärkungsfaser (38) bewegbar sind und zum Unterbrechen des Beschichtens von der Verstärkungsfaser (38) entfernbar sind.

5. Verfahren nach Anspruch 4,
wobei die Kalanderwalzen (32) zum Herstellen des Flächenkontakts beidseitig zum Umschließen der Verstärkungsfaser (38) an diese heranbewegt werden.

6. Verfahren nach Anspruch 5,
wobei die Kalanderwalzen (32) in einen Flächenkontakt mit der Verstärkungsfaser (38) bewegt werden, sobald die Nadelspitze im Begriff ist, das Stichloch (6) zu verlassen.

7. Verfahren nach einem der vorhergehenden Ansprüche,
ferner aufweisend den Schritt des Anordnens mindestens einer Decklage (22, 24) an der ersten Hauptfläche (18) und/oder der zweiten Hauptfläche (20) zum Ausbilden einer ersten Vorform.

8. System (2) zum Herstellen eines Bauteils oder Halbzeugs mit einem faserverstärkten Schaumkern (16), aufweisend:
- eine Nähvorrichtung (10) mit einer zumindest linear bewegbaren Nadel,
- eine Faserbereitstellungseinrichtung (12) zum räumlichen Bereitstellen einer Faser (38), und
- eine Beschichtungsvorrichtung (26),
wobei die Nähvorrichtung (10) dazu ausgebildet ist, die Nadel (8) an einer ersten Hauptfläche (18) des Schaumkerns (16) zu platzieren und den Schaumkern (16) zu durchstechen, so dass eine Nadelspitze durch die erste Hauptfläche (18) in den Schaumkern (16) und anschließend durch eine gegenüberliegend angeordnete zweite Hauptfläche (20) des Schaumkerns (16) dringt,
wobei die Faserbereitstellungseinrichtung (12) dazu ausgebildet ist, eine bereitgestellte Verstärkungsfaser (38) so zu platzieren, dass sie an die den Schaumkern (16) durchstechende Nadelspitze einhakbar ist, und
wobei die Beschichtungsvorrichtung (26) dazu ausgebildet ist, eine in der Nadelspitze eingehakte und durch den Schaumkern (16) gezogene Verstärkungsfaser (38) unmittelbar vor dem Eintreten in den Schaumkern (16) mit Harz zu beschichten, **dadurch gekennzeichnet, dass** das System ein Substrat zum Auflegen eines Schaumkerns aufweist, dass das Substrat (4) eine Stichplatte mit einem Stichloch (6) ist, und
wobei die Nähvorrichtung (10) dazu ausgebildet ist, die Nadel (8) durch den Schaumkern (16) in das Stichloch (6) und zurück zu bewegen,
wobei die Beschichtungsvorrichtung (26) in, an oder unter dem Stichloch (6) angeordnet ist und dazu ausgebildet ist, einen Beschichtungsmodus selektiv zu aktivieren und zu deaktivieren.

9. System (2) nach Anspruch 8,
wobei die Beschichtungsvorrichtung (26) mindestens zwei Kalanderwalzen aufweist, die gegenläufig und quer zu einer Nadelbewegungsrichtung verfahrbar sind, so dass die Verstärkungsfaser (38) selektiv zum Beschichten umschließbar ist.

10. System (2) nach einem der Ansprüche 8 bis 9,
wobei die Beschichtungsvorrichtung (26) eine Injektionsdüse aufweist, die mit einer Harzzufuhrvorrichtung in Fluidverbindung bringbar ist.

11. System (2) nach Anspruch 9,
wobei die Beschichtungsvorrichtung (26) eine Anordnung aus drei Kalanderwalzen (32) aufweist, von denen ein Paar aus zwei Kalanderwalzen (32) und eine einzelne Kalanderwalze (32) auf gegenüberliegenden Seiten des Stichlochs (6) angeordnet sind, und
wobei die Kalanderwalzen (32) derart angeordnet sind, dass die einzelne Kalanderwalze (32) in eine zwischen den Kalanderwalzen (32) des Paars gebildete Lücke bewegbar und mit den Kalanderwalzen (32) in Flächenkontakt bringbar ist, um die Verstärkungsfaser (38) mit den drei Kalanderwalzen (32) in Flächenkontakt zu bringen.

12. System (2) nach Anspruch 8,
wobei das Stichloch (6) länglich ausgeformt ist.

## Claims

1. Method of manufacturing a component or semi-finished product having a fiber-reinforced foam core (16), comprising the steps of:
- Providing a planar or spatially curved/shaped foam core (16) having a first major surface (18) and an opposing second major surface (20),
- placing at least one needle (8) on the first maj or surface (18) of the foam core (16),
- piercing the foam core (16) with the needle (8) such that a needle tip penetrates through the first major surface (18) into the foam core (16) and then through the second major surface (20),
- hooking a reinforcing fiber (38) to the needle tip,
- retracting the needle (8) so that the reinforcing fiber (38) is pulled through the foam core (16), and
- coating the reinforcing fiber (38) with a liquid or powder resin during retraction of the needle (8),
**characterized in that**
- the piercing of the needle (8) comprises penetrating into a stitch hole (6) of a stitch plate (4) on which the foam core (16) is laid,
- the coating of the reinforcing fiber (38) is carried out by a coating device (26) in the stitch hole (6).

2. Method according to claim 1,
wherein the coating is started as soon as the reinforcing fiber (38) is about to enter the foam core (16), and wherein the coating is finished as soon as the reinforcing fiber (38) is fully drawn into the foam core (16).

3. Method according to claim 1,
wherein the coating apparatus (26) comprises a roller assembly through which the reinforcing fiber (38) is passed.

4. Method according to claim 3,
wherein the roller assembly comprises at least two calender rollers (32) movable into surface contact with the reinforcing fiber (38) for coating and removable from the reinforcing fiber (38) for interrupting the coating.

5. Method according to claim 4,
wherein the calender rolls (32) are moved toward both sides of the reinforcing fiber (38) to enclose the reinforcing fiber (38) to make the surface contact.

6. Method according to claim 5,
wherein the calender rolls (32) are moved into surface contact with the reinforcing fiber (38) as soon as the needle tip is about to leave the stitch hole (6).

7. Method according to any one of the preceding claims,
further comprising the step of arranging at least one cover layer (22, 24) on the first major surface (18) and/or the second major surface (20) to form a first preform.

8. System (2) for producing a component or semi-finished product having a fiber-reinforced foam core (16), comprising:
- a sewing device (10) with an at least linearly movable needle,
- a fiber providing device (12) for spatially providing a fiber (38), and
- a coating device (26),
wherein the sewing device (10) is adapted to place the needle (8) at a first major surface (18) of the foam core (16) and to pierce the foam core (16) such that a needle tip penetrates through the first major surface (18) into the foam core (16) and subsequently through an oppositely disposed second major surface (20) of the foam core (16),
wherein the fiber providing means (12) is adapted to place a provided reinforcing fiber (38) so as to be hookable to the needle tip piercing the foam core (16), and
wherein the coating device (26) is adapted to coat a reinforcing fiber (38) hooked in the needle tip and pulled through the foam core (16) with resin immediately prior to entering the foam core (16), **characterized in that** the system comprises a substrate for placing a foam core, that
the substrate (4) is a stitch plate having a stitch hole (6), and
wherein the sewing device (10) is adapted to move the needle (8) through the foam core (16) into the stitch hole (6) and back,
wherein the coating device (26) is disposed in, at or below the stitch hole (6) and is adapted to selectively activate and deactivate a coating mode.

9. System (2) according to claim 8,
wherein the coating device (26) comprises at least two calender rollers that are movable in opposite directions and transversely to a needle movement direction so that the reinforcing fiber (38) is selectively enclosable for coating.

10. System (2) according to any one of claims 8 to 9,
wherein the coating device (26) comprises an injection nozzle fluidly connectable to a resin supply device.

11. System (2) according to claim 9,
wherein the coating apparatus (26) comprises an arrangement of three calender rolls (32), a pair of two calender rolls (32) and a single calender roll (32) being arranged on opposite sides of the tap hole (6), and
wherein the calender rolls (32) are arranged such that the single calender roll (32) is movable into a gap formed between the calender rolls (32) of the pair and into surface contact with the calender rolls (32) to bring the reinforcing fiber (38) into surface contact with the three calender rolls (32).

12. System (2) according to claim 8,
wherein the tap hole (6) is elongated.

## Revendications

1. Procédé de fabrication d'un élément de construction ou d'un produit semi-fini avec un noyau de mousse renforcé par des fibres (16), comprenant les étapes suivantes :
- Préparation d'un noyau de mousse (16) plan ou courbé/formé dans l'espace avec une première surface principale (18) et une deuxième surface principale opposée (20),
- Placer au moins une aiguille (8) sur la première surface principale (18) du noyau de mousse (16),
- Percer le noyau de mousse (16) avec l'aiguille (8) de sorte qu'une pointe d'aiguille pénètre dans le noyau de mousse (16) à travers la première surface principale (18) et ensuite à travers la deuxième surface principale (20),
- Accrochage d'une fibre de renforcement (38) à la pointe de l'aiguille,
- rétracter l'aiguille (8) de sorte que la fibre de renforcement (38) soit tirée à travers le noyau de mousse (16), et
- enduire la fibre de renforcement (38) d'une résine liquide ou en poudre pendant le retrait de l'aiguille (8),
**caractérisé en ce que**
- le perçage de l'aiguille (8) comprend la pénétration dans un trou de piqûre (6) d'une plaque de piqûre (4) sur laquelle l'âme en mousse (16) est placée,
- l'enduction de la fibre de renfort (38) est réalisée par un dispositif d'enduction (26) dans le trou de piqûre (6).

2. Procédé selon la revendication 1,
dans lequel l'enduction est commencée dès que la fibre de renfort (38) est sur le point de pénétrer dans l'âme en mousse (16) et dans lequel l'enduction est terminée dès que la fibre de renfort (38) a été complètement introduite dans l'âme en mousse (16).

3. Procédé selon la revendication 1,
dans lequel le dispositif d'enduction (26) comprend un ensemble de rouleaux à travers lesquels la fibre de renforcement (38) est guidée.

4. Procédé selon la revendication 3,
dans lequel l'ensemble de rouleaux comprend au moins deux rouleaux de calandrage (32) qui peuvent être déplacés en contact de surface avec la fibre de renforcement (38) pour le revêtement et qui peuvent être retirés de la fibre de renforcement (38) pour interrompre le revêtement.

5. Procédé selon la revendication 4,
dans lequel les rouleaux de calandre (32) sont déplacés des deux côtés pour entourer la fibre de renforcement (38) afin d'établir le contact de surface.

6. Procédé selon la revendication 5,
dans lequel les rouleaux de calandrage (32) sont déplacés en contact de surface avec la fibre de renforcement (38) dès que la pointe de l'aiguille est sur le point de quitter le trou de piqûre (6).

7. Procédé selon l'une quelconque des revendications précédentes,
comprenant en outre l'étape consistant à disposer au moins une couche de couverture (22, 24) sur la première surface principale (18) et/ou la deuxième surface principale (20) pour former une première préforme.

8. Système (2) pour la fabrication d'un élément de construction ou d'un produit semi-fini avec un noyau de mousse renforcé par des fibres (16), présentant :
- un dispositif de couture (10) avec une aiguille mobile au moins linéairement,
- un dispositif de mise à disposition de fibres (12) pour la mise à disposition spatiale d'une fibre (38), et
- un dispositif de revêtement (26),
le dispositif de couture (10) étant conçu pour placer l'aiguille (8) sur une première surface principale (18) du noyau de mousse (16) et pour percer le noyau de mousse (16) de sorte qu'une pointe d'aiguille pénètre dans le noyau de mousse (16) à travers la première surface principale (18) et ensuite à travers une deuxième surface principale (20) du noyau de mousse (16) disposée en face,
dans lequel le dispositif de fourniture de fibres (12) est adapté pour placer une fibre de renforcement fournie (38) de manière à ce qu'elle puisse être accrochée à la pointe d'aiguille qui perce le noyau de mousse (16), et
le dispositif d'enduction (26) étant adapté pour enduire de résine une fibre de renforcement (38) accrochée à la pointe d'aiguille et tirée à travers le noyau de mousse (16) immédiatement avant de pénétrer dans le noyau de mousse (16), **caractérisé en ce que** le système comprend un substrat pour appliquer un noyau de mousse, **en ce que**
le substrat (4) est une plaque de piqûre avec un trou de piqûre (6), et
dans lequel le dispositif de couture (10) est adapté pour déplacer l'aiguille (8) à travers le noyau de mousse (16) dans le trou de piqûre (6) et inversement,
dans lequel le dispositif de revêtement (26) est disposé dans, sur ou sous le trou de piqûre (6) et est adapté pour activer et désactiver sélectivement un mode de revêtement.

9. Système (2) selon la revendication 8,
dans lequel le dispositif d'enduction (26) comprend au moins deux rouleaux de calandrage qui peuvent être déplacés en sens inverse et transversalement à une direction de déplacement des aiguilles, de sorte que la fibre de renforcement (38) peut être entourée de manière sélective pour l'enduction.

10. Système (2) selon l'une quelconque des revendications 8 à 9,
dans lequel le dispositif de revêtement (26) comprend une buse d'injection apte à être mise en communication fluidique avec un dispositif d'alimentation en résine.

11. Système (2) selon la revendication 9,
dans lequel le dispositif de revêtement (26) comprend un ensemble de trois rouleaux de calandre (32), dont une paire de deux rouleaux de calandre (32) et un rouleau de calandre unique (32) sont disposés sur des côtés opposés du trou de piqûre (6), et
dans lequel les rouleaux de calandrage (32) sont disposés de telle sorte que le rouleau de calandrage unique (32) peut être déplacé dans un espace formé entre les rouleaux de calandrage (32) de la paire et peut être amené en contact de surface avec les rouleaux de calandrage (32) pour amener la fibre de renforcement (38) en contact de surface avec les trois rouleaux de calandrage (32).

12. Système (2) selon la revendication 8,
dans lequel le trou de piqûre (6) est de forme allongée.
